# EUROPEAN PATENT APPLICATION

(11) **EP 2 611 198 A2**
(43) Date of publication of application: **03.07.2013**
(21) Application number: 12195151.1
(22) Date of filing: 30.11.2012
(51) Int. Cl.: H04N 21/436, H04N 21/431, H04N 21/422, H04N 21/443

(54) **Display apparatus, input apparatus and method for controlling the display apparatus to provide a single-view or multi-view mode**

(30) Priority: 30.12.2011 KR 20110147315; 30.12.2011 KR 20110147319; 10.04.2012 KR 20120037460
(71) Applicant: Samsung Electronics Co., Ltd., Gyeonggi-do 443-742 (KR)
(72) Inventor: Choi, Hoon, Gyeonggi-do (KR); Ryu, Jun-young, Gyeonggi-do (KR); Kim, Bong-yeon, Gyeonggi-do (KR); An, Ho-jun, Seoul (KR); Jeong, Jae-hyun, Gyeonggi-do (KR); Kim, Kwang-youn, Gyeonggi-do (KR); Kim, In-beom, Seoul (KR); Lee, Jae-hwan, Gyeonggi-do (KR)
(74) Representative: Clark, David James

(57) **Abstract**

A display apparatus and a method of controlling the same are provided. The display apparatus includes a plurality of reception units configured to receive a plurality of different contents, a signal processing unit configured to process each of the plurality of contents, an output unit configured to output contents processed in the signal processing unit, a remote controller signal reception unit configured to receive a selection signal from a remote controller, and, if the selection signal is received, a control unit configured to perform different control operations according to a current operation state of the display apparatus.

## Description

### BACKGROUND

### 1. Field

Apparatuses and methods consistent with exemplary embodiments relate to a display apparatus, a control method thereof, and an input apparatus used therein, and more particularly, to a display apparatus and a control method thereof which are capable of controlling a multi-view display apparatus through one input apparatus and controlling content views displayed in a display apparatus using input apparatuses mapped with a plurality of content views, and an input apparatus used in the display apparatus.

### 2. Description of the Related Art

With the development of electronic technology, various types of electronic products have been studied and disseminated. In particular, various display apparatuses such as televisions (TVs), portable phones, personal computers (PCs), laptop PCs, personal digital assistants (PDAs), and the like have been widely used mostly in homes.

With an increase in the use of the display apparatuses, user needs for various functions have also increased. Therefore, the manufacturers continuously make an effort to meet the user needs and thus, the products having new functions such as provision of three-dimensional (3D) contents, which are not included in the related art, have emerged.

In recent years, display apparatuses, in which a plurality of content providers (for example, internet broadcasting stations, terrestrial broadcasting stations, cable broadcasting stations, digital versatile disc (DVD) players, blue-ray players, and the like) simultaneously provide a plurality of contents and a plurality of users simultaneously watch different contents from each other, have been studied and developed.

Since the display apparatuses simultaneously display a plurality of content views, a plurality of input apparatuses configured to control the content views, respectively, are necessary. Thereby, a fabrication cost of the plurality of input apparatuses has increased and there may be confusion in use of the plurality of input apparatuses.

In addition, a user who operates an input apparatus mapped with a specific content view among a plurality of different content views has to control a corresponding content view independently. Therefore, a plurality of input apparatuses mapped with the plurality of content views are necessary.

However, when the plurality of users simultaneously control the same content view, collision between the input apparatuses may occur and it is necessary for only a specific input apparatus to map with a specific content view. Therefore, there is a need for a method of mapping an input apparatus with a specific content view easily and controlling each content view independently while preventing a plurality of input apparatuses being mapped with a specific content view. For example, this case can be prevented by changing the existing input apparatus mapped with the content view or adding a new input apparatus to the plurality of input apparatuses.

When one input apparatus is used to solve the above, additional buttons for selecting a content mode and for switching content views are necessary.

Therefore, since many input buttons are necessary in the input apparatus configured to control the multi-view display apparatus as compared with an input apparatus in the related art, a fabricating cost in a remote controller is increased due to the addition of buttons and one or more input buttons of the remote controller are complicated causing user confusion and making the use of the remote controller difficult.

### SUMMARY

One or more exemplary embodiments may overcome the above disadvantages and other disadvantages not described above. However, it is understood that one or more exemplary embodiment are not required to overcome the disadvantages described above, and may not overcome any of the problems described above.

One or more exemplary embodiments are provided having a display apparatus, a control method thereof, and an input apparatus used therein, which are capable of independently controlling a plurality of content views being displayed in a display apparatus by a plurality of input apparatuses mapped therewith, mapping the content views with the input apparatuses according to the priority of the plurality of input apparatuses to prevent a collision between the input apparatuses, easily changing a mapping relationship between the plurality of content views and the plurality of input apparatuses, and controlling content mode switching and content view switching of the display apparatus, and the multi-view display apparatus using buttons which do not function when the input apparatus is in specific settings.

According to an aspect of an exemplary embodiment, there is provided a display apparatus. The display apparatus may include: a plurality of reception units configured to receive a plurality of contents; an output unit configured to output at least one of the received plurality of contents; and a control unit configured to control the output unit and to perform different control operations, according to a current operation state of the display apparatus based on the input.

The display apparatus may further include a signal processing unit configured to process each of the plurality of contents and a remote controller signal reception unit configured to receive the input including a selection signal from a remote controller. The control unit may control the plurality of reception units, the signal processing unit, and the output unit to be switched into a selected mode which is one of a single-view mode in which to the reception unit receives one of the plurality of contents, the signal processing unit processes the one content, and the output unit displays the one content, and a multi-view mode in which the reception unit receives the plurality of contents, the signal processing unit processes the plurality of contents, and the output unit displays the plurality of contents.

When the current operation state includes an on-screen display (OSD) operation state in which an on-screen display (OSD) menu is displayed and an off operation state in which the OSD menu is not displayed. If the output unit is in the single-view mode and the current operation state is the OSD operation state, the control unit may perform a control operation corresponding to the selected menu in the OSD menu based on the selection signal. If the current operation state is the off operation state, the control unit may be switched into the multi-view mode.

The multi-view mode may include a dual-view mode, a triple-view mode, and a quadruple-view mode. If the selection signal is received a repeated number of times when the current operation state is the off operation state and the output unit is in the single-view mode, the control unit may be switched sequentially to the dual-view mode, the triple-view mode, and the quadruple-view mode and back to the single-mode view based on the received repeated number of times of the selection signal.

If the selection signal is received when the current operation state is the OSD operation state and the output unit is in the single-view mode, the control unit may perform a control operation corresponding to a selected menu among the OSD menu based on the selection signal; if the selection signal is received when the current operation state is the off operation state and the output unit is in the single-view mode, the control unit may ignore the selection signal; and if the selection signal is received when the output unit is in the multi-view mode, the control unit may select one of the plurality of content views as a control target.

The remote controller signal reception unit may receive a control signal from the remote controller and if the control signal is received, the control unit may perform a control operation corresponding to the control signal with respect to the control target which is the selected one content view.

If the selection signal is received when the output unit is in the multi-view mode, the control unit may select the one content view as the control target; and if the selection signal is repeatedly received, the control unit may sequentially select next content view as the control target for each reception of the selection signal.

If the selection signal is received when the output unit is in the multi-view mode, the control unit may select a content view from the plurality of content view corresponding to a type of the selection signal as the control target.

The control unit may control the signal processing unit to generate an indicator indicating the control target in a video frame of the content view selected as the control target among the plurality of content views and may control the output unit to display the generated indicator.

The control unit may control the signal processing unit to generate a highlight effect to the content view selected as the control target among the plurality of content views and the output unit to display the generated highlight effect.

If the selection signal is received when the output unit is in the multi-view mode, the control unit may control the output unit to display an indicator indicating a content-view order in a video frame of each of the plurality of content views and the signal processing unit to change a display state of the indicator represented in the video frame of the content view selected as the control target.

The display apparatus according to one aspect of the exemplary embodiment may further include a storage unit configured to store information for a plurality of remote controllers mapped with the plurality of content views, respectively. If the control signal is received from one of the plurality of remote controller comprising the remote controller, the control unit may perform a control operation based on the control signal with respect to a content view that is mapped with the one remote controller.

The control unit may determine a mapping state of the plurality of remote controllers with the plurality of content view based on priority order of the plurality of remote controllers.

If a new remote controller is paired to the display apparatus and one of the plurality of content views is selected based on input from the new remote controller, the control unit may determine whether or not a remote controller that is paired to the selected content view exists, and map the selected content view with the new remote controller based on the determination. If the remote controller mapped with the selected content view exists, compare a priority of the existing remote controller and a priority of the new remote controller, and map a remote controller having higher priority to the selected content view.

The control unit may automatically map another view among the plurality of content views with a remote controller having a lower priority of the existing remote controller and the new remote controller.

A priority of a radio frequency (RF) remote controller among the plurality of remote controllers may be higher than that of an infrared (IR) type remote controller.

The control unit may sequentially map the plurality of remote controllers with the plurality of content views based on a paring order of the plurality of remote controllers and map non-paring remote controllers with non-mapped content views of the plurality of content views.

According to another aspect of an exemplary embodiment, there is provided an input apparatus which controls a display apparatus configured to display a plurality of content views. The input apparatus may include: a wireless communication unit configured to wirelessly communicate with the display apparatus; an identification information storage unit configured to store unique identification information of the display apparatus; an input unit configured to receive input of a control command; and an input control unit configured to transmit the unique identification information to the display apparatus using the wireless communication unit to perform pairing and, if the control command is received by the display apparatus in a state in which the pairing between the display apparatus and the input device is made, the input control unit is configured to transmit the control command to the display apparatus to control an operation in one of the plurality of content views.

According to another aspect of an exemplary embodiment, there is provided a method of controlling a display apparatus. The method may include: receiving a selection signal from a remote controller; checking an operation state of the display apparatus based on a reception of the selection signal; and performing control operations different from each other according to the operation state.

The performing the control operations may include, if the selection signal is received in an on-screen display (OSD) operation state in which an OSD menu is displayed which is operated in a single-view mode, performing a control operation corresponding to a menu selected by the selection signal among the OSD menu and, when the selection signal is received in an operation state in which the OSD menu is not displayed, performing switching into a multi-view mode.

The performing the control operations may include, if the received selection signal is received a repeated number of times in the operation state in which the OSD menu is not displayed and which is operated in the single-view mode, sequentially switching to a dual-view mode, a triple-view mode, and a quadruple-view mode, and back to the single-view mode based on a number of times the selection signal is received.

Alternatively, the performing the control operations may include, if the selection is received in an On Screen Display (OSD) menu operation state and which is operated in a single-view mode, performing a control operation corresponding to a menu among OSD menus, which is selected based on the received selection signal, if the selection signal is received in an off operation state in which the OSD menu is not displayed and which is operated in the single-view mode, ignoring the selection signal, and, if the selection signal is received in a multi-view mode, selecting one of a plurality of content views as a control target.

Performing the control operations may include performing an operation based on the received selection signal with respect to the content view selected as the control target.

Alternatively, the performing the control operations may include, selecting the one content view as the control target if the selection signal is received in the multi-view mode and, if the selection signal is repeatedly received, sequentially selecting next content view as the control target for each reception of the selection signal.

The performing the control operations may include selecting a content view among the plurality of content views that corresponds to a type of the selection signal when in the multi-view mode.

The method may further include generating an indicator indicating a control target in a video frame of the content view selected as the control target among the plurality of content views and displaying the generated indicator.

The method may further include generating a highlight effect to the content view selected as the control target among the plurality of content views and displaying the highlight effect.

The method may further include, if the selection signal is received in the multi-view mode, displaying an indicator indicating a content-view order in the video frame of each of the plurality of content views and changing a display state of the indicator represented in the video frame of the content view selected as the control target.

According to another aspect of an exemplary embodiment, there is provided a method of controlling a display apparatus. The method may include: receiving a plurality of contents different from each other; and outputting at least one of the plurality of content views, wherein a content view mapped with a respective input apparatus based on the stored information is selected if a control signal is received from the respective input apparatus; and performing control operations corresponding to the control signal with respect to the select content view.

The performing the control operations may include determining a mapping state with the plurality of content views according to a priority of a plurality of input apparatuses.

Alternatively, the performing the control operations may include, if a new input apparatus is paired and one of the plurality of content views is selected, determining whether or not an existing input apparatus mapped to the selected content view is present; if the determining yields that the existing input apparatus is not present, mapping the new input apparatus with the selected content view; and if the determining yields that the existing input apparatus is present, comparing a priority of the existing input apparatus and the new input apparatus; and mapping an input apparatus having a higher priority with the selected content view.

The performing the control operations may include automatically mapping an input apparatus having a lower priority among the existing input apparatus and the new input apparatus with another content view of the plurality of content views.

Alternatively, the performing the control operations may include performing a control operation in a state in which the priority of an RF type input apparatus is higher than that of an IR type input apparatus.

The performing the control operation may include sequentially mapping the plurality of input apparatuses with the plurality of content views according to a pairing order of the plurality of input apparatuses and mapping the non-paired input apparatuses with the non-mapped content views of the plurality of content views.

According to the above-described various exemplary embodiments, the display apparatus switches the content view mode using a non-functional button in a specific circumstance or controls a content view displayed in a multi-view mode display apparatus so that it is possible to easily and intuitively control the display apparatus and to reduce a fabrication cost of a multi-view remote controller using an input apparatus in the related art.

In addition, it is possible to independently control the plurality of content views through the plurality of input apparatuses respectively mapped with the plurality of content views displayed in the display apparatus, and map the content view and an input apparatus according to the priority of the plurality of input apparatuses to prevent collision between the input apparatuses, to easily change the mapping relationship between the plurality of content views and the plurality of input apparatuses.

According to the present invention there is provided an apparatus and method as set forth in the appended claims. Other features of the invention will be apparent from the dependent claims, and the description which follows.

### BRIEF DESCRIPTION OF THE DRAWING FIGURES

The above and/or other aspects will be more apparent by describing in detail exemplary embodiments, with reference to the accompanying drawings, in which:
FIGS. 1 and 2 are views illustrating systems providing a plurality of contents to a plurality of users according to an exemplary embodiment;
FIG. 3 is a view illustrating an input apparatus according to an exemplary embodiment;
FIG. 4 is a view illustrating matching between a plurality of input apparatus and a plurality of content views according to an exemplary embodiment;
FIG. 5 is a view illustrating matching between a plurality of content views and input apparatuses when there is a new input apparatus with the same priority as the existing input apparatus according to an exemplary embodiment;
FIG. 6 is a view illustrating matching between a plurality of content views and input apparatuses when there is a new input apparatus with a different priority from the existing input according to an exemplary embodiment;
FIG. 7 is a block diagram illustrating a configuration of a display apparatus according to an exemplary embodiment;
FIG. 8 is a block diagram illustrating a configuration of a display apparatus according to an exemplary embodiment;
FIG. 9 is a block diagram illustrating a detailed configuration of a signal processing unit according to an exemplary embodiment;
FIGS. 10A - 10C are views illustrating various examples of methods of representing an indicator in a display view according to an exemplary embodiment;
FIG. 11 is a flowchart illustrating a method of controlling a display apparatus according to an exemplary embodiment;
FIG. 12 is a flowchart illustrating in detail a method of controlling a display apparatus according to an exemplary embodiment;
FIG. 13 is a flowchart illustrating a detailed configuration of an input apparatus according to an exemplary embodiment;
FIG. 14 is a flowchart illustrating a method of controlling a display apparatus according to another exemplary embodiment; and
FIG. 15 is a flowchart illustrating an operation of changing mapping between a plurality of content views and an input apparatus according to another exemplary embodiment.

### DETAILED DESCRIPTION OF THE EXEMPLARY EMBODIMENTS

Hereinafter, exemplary embodiments will be described in more detail with reference to the accompanying drawings.

In the following description, same reference numerals are used for the same elements when they are depicted in different drawings. The matters defined in the description, such as detailed construction and elements, are provided to assist in a comprehensive understanding of the exemplary embodiments. Thus, it is apparent that the exemplary embodiments can be carried out without those specifically defined matters. Also, functions or elements known in the related art are not described in detail since they would obscure the exemplary embodiments with unnecessary detail.

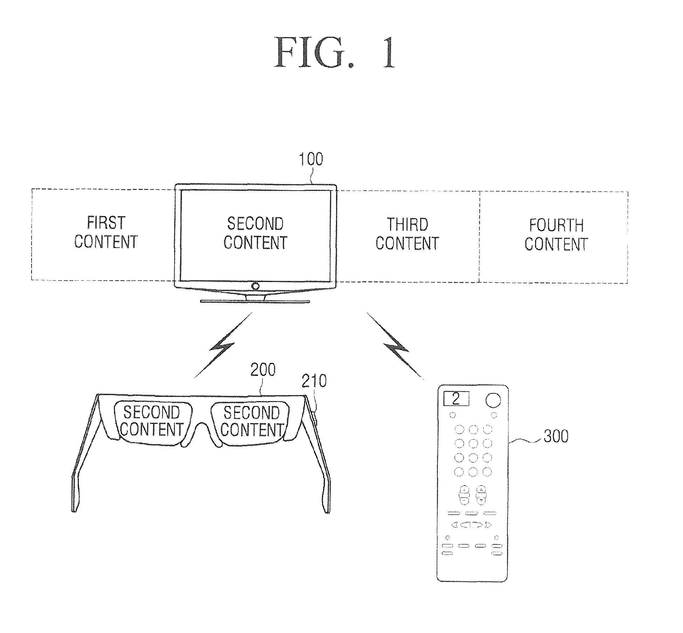

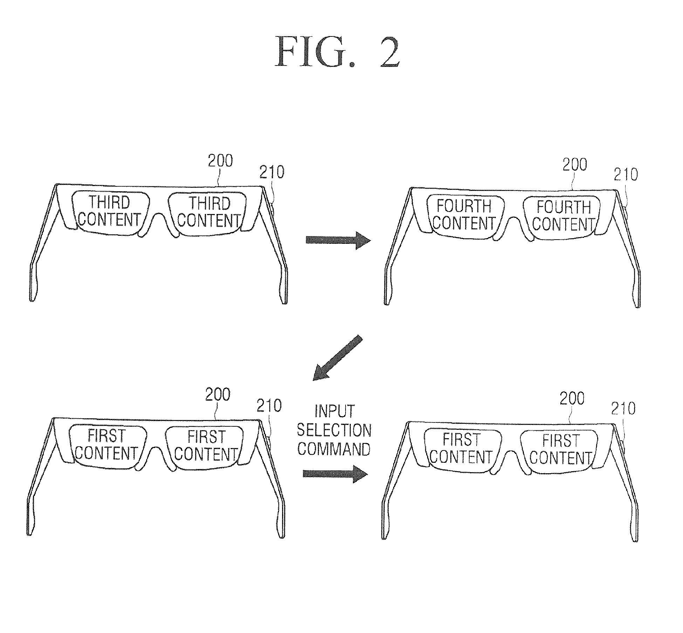

FIGS. 1 and 2 are views illustrating systems which provide a plurality of contents to a plurality of users according to an exemplary embodiment. As shown in FIG. 1, the system includes a display apparatus 100, a glasses apparatus 200, and an input apparatus 300.

The display apparatus 100 alternately displays a plurality of contents (first content to fourth content), generates a synchronous signal for synchronizing the glasses apparatus 200 corresponding to each content, and transmits the synchronous signal to the glasses apparatus 200.

When a corresponding content view is displayed according to the synchronous signal, the glasses apparatus 200 opens both a left-eye glass and a right-eye glass. Therefore, a viewer wearing the glasses apparatus 200 may watch one content.

The input apparatus 300 may control various functions such as mode switching of a content view currently mapped among content views being displayed in the display apparatus 100, change of a channel, change volume, change one or more settings of the display apparatus, and the like.

In an exemplary embodiment, when a content switching mode starts, the display apparatus 100 and the glasses apparatus 200 sequentially switch the contents and provided the contents to the users. Detailed description thereof will be made with reference to FIGS. 1 and 2.

As shown in FIG. 1, the display apparatus 100 alternately displays the first content to fourth content in a video frame unit. The glasses apparatus 200 is synchronized with a display timing of the second content to open shutter glasses and provides the second content to the user.

The user may press an input button 210 provided on the glasses apparatus 200 or a button provided in the input apparatus 300 to switch a content view. Switching of a plurality of content views will be described in greater detail below.

As shown in FIG. 2, the viewer who watches the second content view may press the button 210 included in the glasses apparatus 200 or may manipulate the input apparatus 300 to sequentially switch a content view in order of the third content, the fourth content, and the first content. That is, the display apparatus 100 may sequentially transmit a signal for allowing synchronization with the third content, the fourth content, and the first content to the glasses apparatus 200 and thus the user may sequentially watch the third content, the fourth content, and the first content through the glasses apparatuses. Alternatively, the user may press a specific button on the input apparatuses 300 to directly switch a content view to a corresponding content .e.g., from the third content view to the first content view and so on.

When the user inputs a selection command through a button 210 provided on the glasses apparatus 200 or by manipulating the input apparatus 300, the glasses apparatus 200 is synchronized with the first content which is viewed by the user from a point in time when the selection command is input to turn on both the left-eye shutter glass and the right-eye shutter glass of the glasses apparatus 200. Therefore, the user who is watching the second content may switch a content view to the first content.

In another exemplary embodiment, the display apparatus 100 is alternately displaying the second content, the third content, the fourth content, and the first content in a video frame unit. In a state in which the user is watching the second content, if the user wants to change the second content into another content, the user presses the input button 210 of the glasses apparatus 200 or an input button of the input apparatus 300 once. The display apparatus 100 may display a video frame of the third content which is the next video frame of a video frame of the second content as a still image to the user.

That is, when the user presses the input button once, the user may watch the still image of the third content which is the next video frame of the video frame of the second content belonging to a first cycle including the second content in which the input button is pressed. When the user presses the input button once again, the user may watch a still image of the fourth content which is next video frame of the video frame of the third content belonging to a second cycle including the third content. When the user checks the still image to confirm a content view to be changed and selects the displayed still image, the user may switch the content view into a corresponding content view.

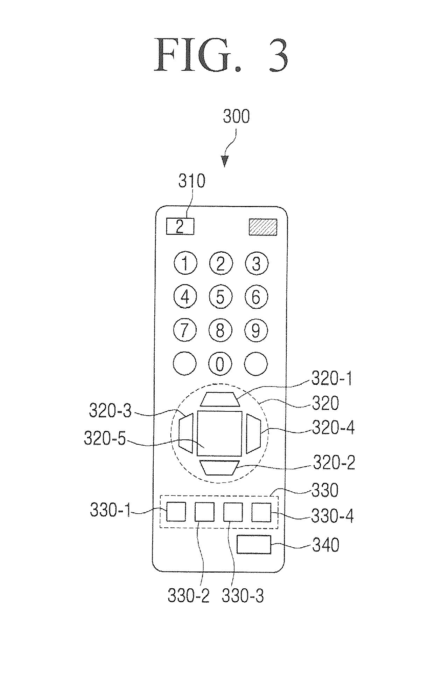

FIG. 3 is a view explaining an input apparatus according to an exemplary embodiment. Referring to FIG. 3, the input apparatus 300 may include a display window 310 configured to show a content view that is currently being controlled by a input apparatus, a direction key 320 usable in an OSD menu, a functional key 330 usable in the OSD menu, and a content mode selection key 340.

The display window 310 displays a content view which is currently mapped with the input apparatus 300. The display window 310 may display information for a content view that is controlled by the input apparatus 300 through numbers, letters, figures, or a combination thereof.

The direction key 320 is a button configured to be used to switch a direction of the OSD menu when the OSD menu is displayed on a screen of the display apparatus 100. The direction key 320 includes an upward arrow key 320-1, a downward arrow key 320-2, a leftward arrow key 320-3, a right arrow key 320-4, and selection key 320-5. In general, in a state in which the OSD menu is not displayed on a screen of the display apparatus 100 while the display apparatus 100 operates in a single-view mode, even when the user presses the direction key 320, the direction key 320 does not perform an original movement function.

However, in a state in which the OSD menu is not displayed while the display apparatus 100 operates in a multi-view mode, when the user presses the direction key 320, the content view switching is activated using a first direction key input. The activation of the content view switching denotes displaying information for a content view currently controlled in a display window 310 of the input apparatus 300 or flickering the displaying. In a state in which the content view switching is activated, when the user sequentially presses the direction key 320, the content view being displaying by the display apparatus 100 is sequentially switched based on the number of pressings of the direction key 320.

For example, in a state in which a content view controlled by the input apparatus 300 is a second content view (the second content), when the user presses the direction key 320 once and thus the content view switching is activated, number 2 is displayed in the display window 310 of the input apparatus 300. In this state, when the user presses the direction key 320 once more, the content view is switched to a third content view (the third content) which is a content view adjacent thereto. When the user presses the direction key 320 once again, the content view may be switched to a fourth content view (the fourth content).

The functional key 330 is a button used to perform a specific function provided in the OSD menu when the OSD menu is displayed on the screen of the display apparatus 100. Although four functional keys 330 are illustrated in FIG. 3, the number of the functional keys and functions of the functional keys may be variously modified according to the type of the input apparatus. In the exemplary embodiment, the functional key 330 includes a first functional key 330-1, a second functional key 330-2, a third functional key 330-3, and a fourth functional key 330-4, as shown in FIG, 3.

The functional key 330 does not function when the OSD menu is not displayed on the screen of the display apparatus. However, if the functional key 330 is pressed in the single-view mode, the functional key 330 may function as a content view selection button which provides a direct switch to a content view allocated to each of the functional keys 330-1 to 330-4.

The content mode selection key 340 is a button used to perform a function for selecting a list represented in the OSD menu when the OSD menu is displayed on the screen of the display apparatus 100. The content mode selection key 340 does not function when the OSD menu is not displayed. However, the content mode selection key 340 may be used as a key configured to sequentially switch the content-view mode into the multi-view mode based on the number of times the content mode selection switch button is pressed when the content mode selection key is pressed in the single-view mode, or to switch the content view into the single-view mode when the content mode selection switch 340 is pressed in the multi-view mode.

For example, in a state in which the OSD menu is not displayed on a screen of the display apparatus while the display apparatus 100 operates in the single-view mode, when the selection key 340 is pressed, the content view is switched from the single-view mode into the dual-view mode. In this state, when the selection key 340 is pressed again, the content view is switched from the dual view mode into the triple-view mode. In this state, when the selection key 340 is pressed again, the content view is switched from the triple-view mode into the quadruple-view mode. In this state, when the selection key 340 is pressed again, the content view is switched from the quadruple-view mode into the single-view mode. The quadruple views are provided by way of an example only and not by way of a limitation. Exemplary embodiments may include a multi-view mode above the quadruple views.

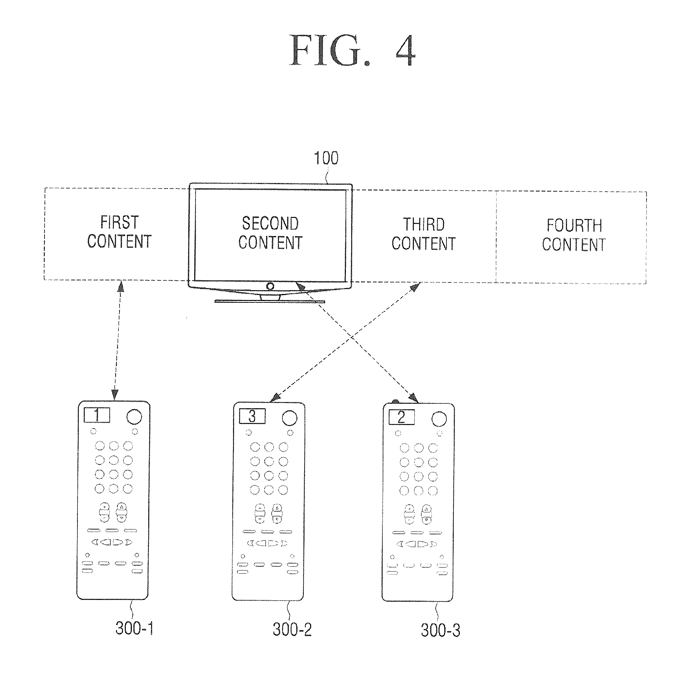

FIG. 4 is a view illustrating matching between a plurality of input apparatuses and a plurality of content views according to an exemplary embodiment.

Referring to FIG. 4, it can be seen that the display apparatus 100 displays a plurality of content views (first content to the fourth content). As shown in FIG. 4, a plurality of input apparatuses 300-1 to 300-3 are mapped to a plurality of content views (first content to third content).

Specifically, it can be seen that the first input apparatus 300-1 is mapped to the first content view (first content view), the second input apparatus 300-2 is mapped to the third content view (third content view), and the third input apparatus 300-3 is mapped to the second content view (second content view).

Among the plurality of input apparatuses illustrated in FIG. 4, the first input apparatus 300-1 and the second input apparatus 300-2 are input apparatuses which are paired to the display apparatuses in a RF manner. The RF type input apparatus may exchange information data with the display apparatus. Meanwhile, the third input apparatus 300-3 is an IR type input apparatus. The IR type input apparatus perform unidirectional communication with the display apparatus and does not perform bidirectional information data exchange.

As shown in FIG. 4, the display apparatus 100 configured to display the plurality of content views maps the plurality of content views with the plurality of input apparatuses 300-1 to 300-3 while pairing with the plurality of input apparatuses 300-1 and 300-2. The mapping process is described in greater detail below.

The user may perform change a setting value for each content view, change a channel, adjust the volume, adjust the brightness, and the like using the input apparatus mapped to a respective content view. Each of the plurality of input apparatuses 300-1 to 300-3 may include a plurality of keys configured to perform various changes and input adjustment operation commands. In addition, each of the plurality of input apparatuses 300-1 and 300-3 may include an indicator provided to discriminate a currently mapped content view.

The plurality of input apparatuses 300-1 to 300-3 are mapped with the content views being displayed in the display apparatuses, respectively. Separately from the plurality of the input apparatuses, although not shown in FIG. 4, the plurality of glasses apparatuses 200 are mapped with the plurality of content views, respectively. That is, one content view is synchronized with one or more glasses apparatuses 200 and at least one input apparatus 300.

An exemplary embodiment illustrates that the glasses apparatus 200 is separately configured from the input apparatus 300, but the glasses apparatus 200 and the input apparatus 300 may be implemented as a one integrated apparatus. An exemplary embodiment in which the display apparatus 100 maps the plurality of input apparatuses 300 and the plurality of content views, respectively, will be described in greater detail further below. However, according to an exemplary embodiment, the display apparatus 100 may map one content view with one or more glasses apparatus 200 and at least one input apparatus 300.

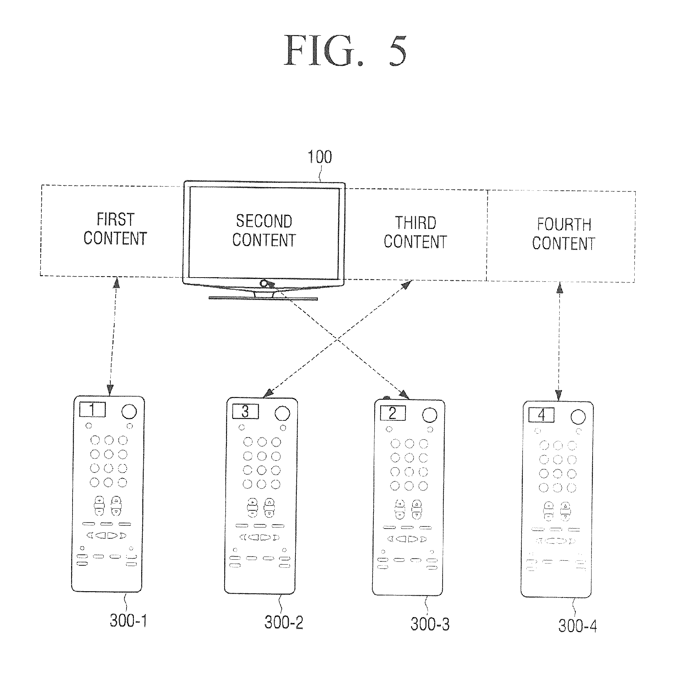

FIG. 5 is a view illustrating matching between a plurality of content views and input apparatuses when there is a new input apparatus having the same priority as an existing input apparatus according to an exemplary embodiment.

The display apparatus shown in FIG. 5 maps the plurality of content views (first content view to third content view) to the plurality of input apparatuses 300-1 to 300-3. In this state, a new input apparatus 300-4 is paired to the display apparatus 100 and when a control operation command is input using the new input apparatus 300-4, the display apparatus 100 performs a corresponding control operation based on the control operation command from the new input apparatus.

At this time, the new input apparatus 300-4 request mapping with the third content to the display apparatus 100. The request for mapping with a specific content using an input apparatus 300-4 may be performed by pressing a specific button on the input apparatus 300-4 to display information for non-mapped specific contents and pressing the selection button in this state. Alternatively, the mapping request may be performed by pressing a number key to select a corresponding content and pressing the selection button to request the mapping. In addition, various other exemplary embodiments which request mapping with a specific content using an input apparatus may be implemented.

As shown in FIG. 5, the third content view (third content) is mapped with the RF type second input apparatus 300-2. The display apparatus 100 compares a priority between the new input apparatus 300-4 and the second input apparatus 300-2 and determines that the priority of the new input apparatus 300-4 is the same as that of the second input apparatus 300-2. The display apparatus 100 then does not permit the mapping request for the third content of the new input apparatus 300-4 since the existing input apparatus 300-2 and the third content view (the third content) already have a mapping relationship.

At this time, as shown in FIG. 5, the display apparatus may automatically map the new input apparatus 300-4 with the fourth content view (fourth content) which is not mapped with any input apparatus. Although not illustrated in FIG. 5, the display apparatus 100 may compare the priority of the new input apparatus 300-4 with priorities of the remaining input apparatuses and map the new input apparatus with a content view which is mapped with the input apparatus 300-3 having a lower priority than the new input apparatus 300-4.

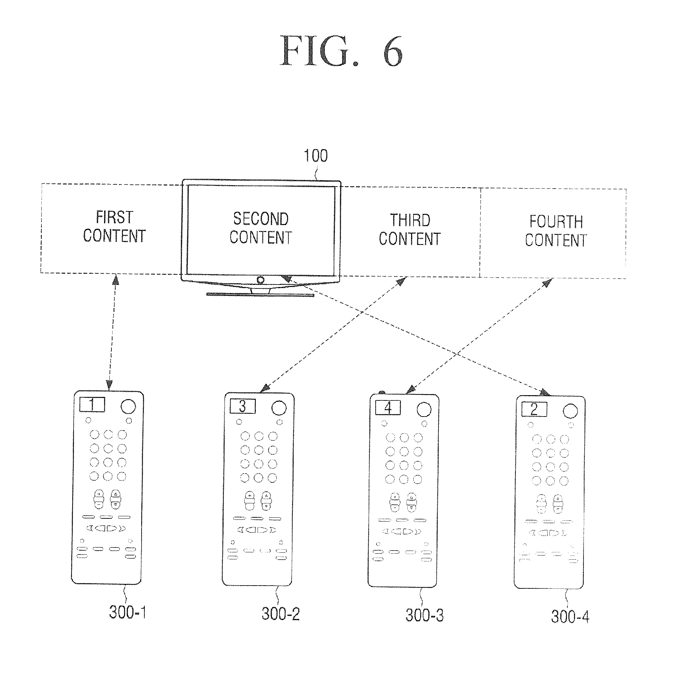

FIG. 6 is a view illustrating mapping between a plurality of content views and input apparatuses when there is a new input apparatus having a priority different from the existing input apparatus according to an exemplary embodiment.

The display apparatus 100 illustrated in FIG. 6 maps the plurality of content views (first convent view to third content view) with the plurality of input apparatuses 300-1 to 300-3. In this state, the new input apparatus 300-4 is paired to the display apparatus 100 and when the control operation command is input using the new input apparatus 300-4, the display apparatus 100 performs a control operation based on the control operation command input by the new input apparatus 300-4.

The input apparatus 300-4 requests the display apparatus 100 to map it to the second content view (second content), which is mapped with the third input apparatus 300-3 (shown in FIG. 4, for example) having a different priority from the new input apparatus 300-4. In this case, the display apparatus 100 compares the priorities of the new input apparatus 300-4 and the third input apparatus 300-3 and maps the new input apparatus 300-4 with the second content view (second content) since the priority of the new input apparatus 300-4 is higher than that of the third input apparatus 300-3. In this case, the input apparatus 100 may automatically map the third input apparatus 300-3 with the fourth content which is not mapped with any input apparatus as shown in FIG. 6.

Although not shown in FIG. 6, if all the remaining content views of the plurality of content views are mapped with the plurality of input apparatuses, the third input apparatus 300-3 may be excluded from being mapped with the plurality of content views.

That is, according to an exemplary embodiment, to prevent collision among the plurality of input apparatuses with respect to one content, an input apparatus having a higher priority is assigned to a corresponding content view regardless of a pairing order of the other input apparatuses, thereby performing mapping with the corresponding content view.

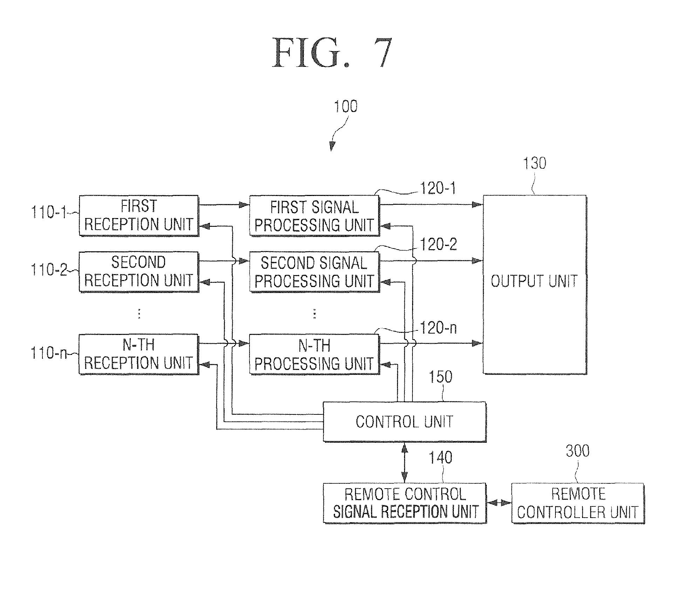

FIG. 7 is a block diagram illustrating a configuration of a display apparatus according to an exemplary embodiment. Referring to FIG. 7, the display apparatus 100 may include a plurality of reception units 110-1 to 110-n, a plurality of signal processing units 120-1 to 120-n, an output unit 130, a remote control signal reception unit 140, and a control unit 150.

The display apparatus 100 illustrated in FIG. 7 may be implemented as various apparatuses including a display unit such as TVs, portable phones, PDAs, laptop PCs, monitors, tablet PCs, electronic books, electronic frames, and kiosks.

First, the plurality of reception units 110-1 to 110-n may receive different contents from each other, respectively. Specifically, each of the plurality of reception units 110-1 to 110-n receives content from a broadcasting which transmits broadcasting program contents using a broadcasting network or a web server which transmits contents files using Internet. Each of the plurality of reception units 110-1 to 110-n may receive the content from various recording medium reproducing apparatus (not shown) provided in the display apparatus 100 or connected to the display apparatus 100. At this time, the recording medium reproducing apparatus may be an apparatus configured to reproduce contents recorded in various kinds of recording media such as compact discs (CDs), DVDs, hard discs, blue-ray discs, memory cards, or USB memories.

In an exemplary embodiment in which contents are received from a broadcasting station, each of the plurality of reception units 110-1 to 110-n may be implemented to include hardware components such as a tuner, a demodulator, and an equalizer which are not shown herein. Meanwhile, in an exemplary embodiment in which contents are received from a source such as the web server, each of the plurality of reception units 110-1 to 110-n may be implemented with only a hardware network interface card (not shown). Alternatively, in an exemplary embodiment in which contents are received from the above-described various recording medium reproducing apparatuses, each of the plurality of reception units 110-1 to 110-n may be implemented with an interface unit (not shown) comprising hardware components connected to the recording medium reproducing apparatus. As described above, the plurality of reception units may be implemented in various forms and may include a number of hardware and/or software components according to the exemplary embodiments.

The plurality of reception units 110-1 to 110-n do not necessarily receive contents from the same type sources and may receive the contents from different type sources. For example, the first reception unit 110-1 may be implemented to be configured as a tuner, a demodulator, and an equalizer and the second reception unit 110-2 may be implemented to be configured as a network interface card.

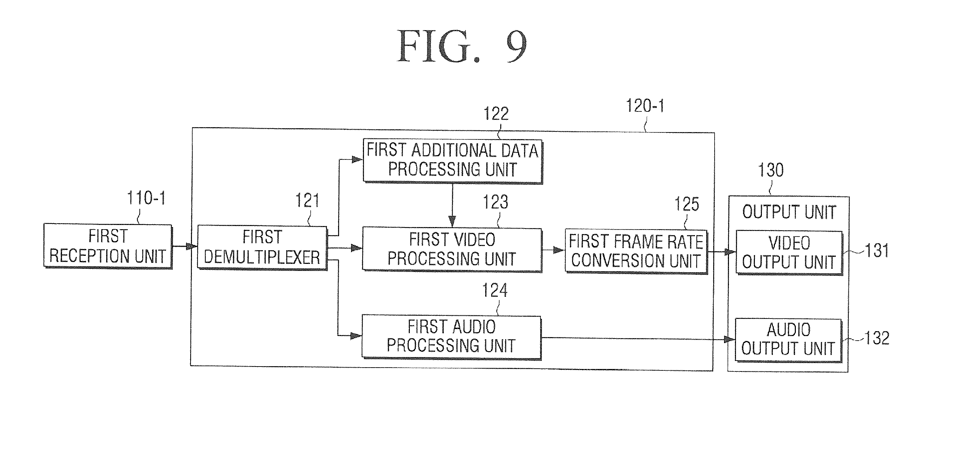

The plurality of signal processing units 120-1 to 120-n may process contents received from the plurality of reception unit, respectively and form a video frame. Detailed description of the signal processing units 120-1 to 120-n is provided below with respect to FIG. 9. The processing units 120-1 to 120-n output a video frame to the output unit 130, which outputs the frame. The output unit 130 may include hardware and/or software components that process frames for output e.g., order frames for output. The remote control signal reception unit 140 receives user input from the remote controller unit 300 and provides the received input to the control unit 150. Based on the input received from the remote control signal reception unit 140, the control unit 150 controls the reception units 110-1 to 110-n and the signal processing units 120-1 to 120-n.

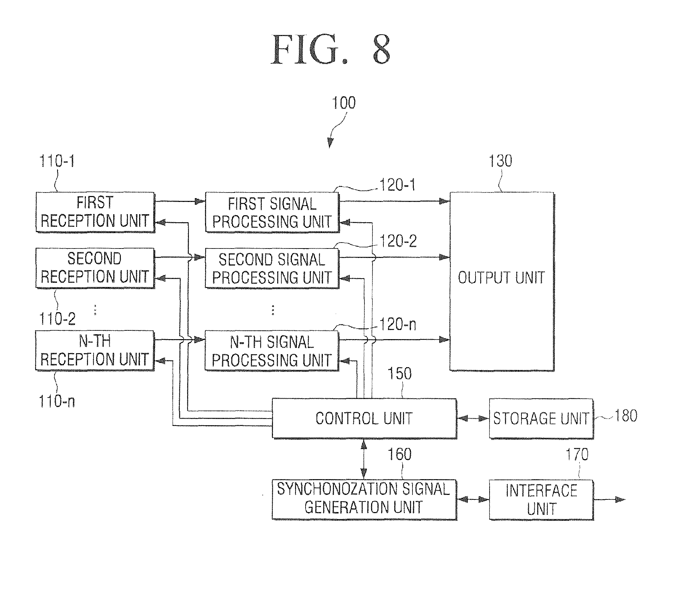

FIG. 8 is a block diagram illustrating a configuration of a display apparatus according to another exemplary embodiment. Referring to FIG. 8, the display apparatus 100 may include a plurality of reception units 110-1 to 110-n, a plurality of signal processing unit 120-1 to 120-n, an output unit 130, control unit 150, a synchronization signal generation unit 160, an interface unit 170, and a storage unit 180.

The plurality of reception units 110-1 to 110-n, the plurality of signal processing units 120-1 to 120-n, the output unit 130, and the control unit 150 are similar to or the same as those in FIG. 7 and thus detailed description thereof will be omitted.

The synchronization signal generation unit 160 generates a synchronization signal for allowing the display apparatus 100 to be mapped with the plurality of input apparatuses, respectively. The synchronization signal is transmitted to each of the input apparatuses paired to the display apparatus 100.

The interface unit 170 is an interface configured to perform bidirectional communication with an RF type input apparatus. That is, the interface unit 170 may transmit the synchronization signal generated in the synchronization signal generation unit 160 to the input apparatus and receive a pairing request signal from the input apparatus. Further, the interface unit 160 performs various communication operations to communicate between the input apparatus and the display apparatus in a wired/wireless manner.

The storage unit 180 stores data for executing a mapping relationship between the input apparatus and content views displayed in the display apparatus 100. Alternatively, the storage unit 180 may store apparatus information for the paired input apparatuses.

FIG. 9 is a block diagram illustrating a detailed configuration of a signal processing unit according to an exemplary embodiment.

Referring to FIG. 9, the first signal processing unit 120-1 may include a first demultiplexer 121 (hereinafter, may be simply referred to as 121), a first additional data processing unit 122, a first video processing unit 123, a first audio processing unit 124, and a first frame rate conversion unit 125. Although only the first signal processing unit 120-1 has been illustrated in FIG. 9, other signal processing units 120-2 to 120-n may be implemented to have a similar configuration to or have the same configuration as the first signal processing unit 120-1 of FIG. 9.

Here, the first demultiplexer 121 may allocate additional data, video data, and audio data included in each content to each processing unit when the display apparatus 100 operates in the multi-view mode. That is, the demultiplexer 121 may separate video data, audio data, and additional data included in each content received from each of the reception units 110-1 to 110-n and allocate the separated additional data, video data, and audio data to corresponding first additional data processing unit 122, first video processing unit 123, and first audio processing unit 124.

When additional information such as an electronic program guide (EPG) and captions is included in the content, the first additional data processing unit 122 may process the additional data separated by the first demultiplexer 121 and add captions and the like which is processed to be displayed through the output unit 130 to a corresponding video frame.

The first video processing unit 123 performs signal processing on the video data included in the content received from the first demultiplexer 121. Specifically, the first video processing unit 123 may include a decoder configured to performing decoding on the video data and a scaler configured to perform up or down scaling according to a display size of a video output unit 131, which are not shown therein.

Further, the first video processing unit 123 may convert the video data into a data format corresponding to the first frame rate conversion unit 125. Specifically, when the input video data has a top-to-bottom format and the first frame rate conversion unit 125 processes a video frame in a side-by-side format, the first video processing unit 123 processes video frames of each content side by side in a longitudinal direction and converts the video frames into a side-by-side format.

The first audio processing unit 124 performs signal processing on the audio data included in the content received from the first demultiplexer 121. Specifically, the first audio processing unit 124 may include a decoder configured to perform decoding on the audio data, a modulation unit configured to modulate each decoded audio data into signals having different frequencies from each other, which are not shown therein.

The first frame rate conversion unit 125 converts a frame rate of the content provided from the first video processing unit 123 to a frame rate suitable for a multi-content display rate with reference to an output rate of the display apparatus 100. Specifically, when the display apparatus 100 operates at 60 Hz, the first frame rate conversion unit 125 may convert the frame rate of each content into a rate of nx60 Hz.

The output unit 130 may include the video output unit 131 and the audio output unit 132.

The video output unit 131 of the output unit 130 alternatively arranges video frames of each content formed in the plurality of the signal processing units 120-1 to 120-n to be displayed. Specifically, the video output unit 131 multiplexes the image frame of each content provided from the plurality of signal processing units 120-1 to 120-n to be at least alternatively arranged and displays a multiplexing result. In some cases, the video output unit 131 may perform up or down scaling of the video frames of each content to be suitable for a screen size.

For example, in the case of a shutter glass type display apparatus, the video output unit 131 is configured to allow a video frame of a first content, a video frame of a second content, ..., a video frame of an n-th content to be at least alternatively arranged and to be displayed. The user wears the glasses apparatus 200 interlocked at timing when the content is displayed and watches his/her desired the glasses apparatus 200 includes a left-eye shutter and a right-eye shutter. When watching a three-dimensional (3D) content, the left-eye glass and the right-eye glass are alternately turned on/off. However, when watching the frame in which the video frames of each content are alternately arranged as described above, the left-eye glass and the right-eye glass are simultaneously turned on/off according to an output timing of the content synchronized with the glasses apparatus. Therefore, the user may watch the content separately from the other users.

As described above, a mode which alternately arranges the video frames of each content to be displayed may referred to as a multi-view mode (or a dual-view mode) and the like. When the display apparatus 100 operates in a general mode (or a single-view mode) which displays only one of a 2D content and a 3-D content, the display apparatus 100 may activate only one of the plurality of reception units 110-1 to 110-n and process presenting the content. When the user select the multi-view mode during the operation in the general mode, the display apparatus 100 may activate the remaining reception units and process data through the above-described exemplary method.

The content may be a 2D content or a 3D content. The 3D content denotes a content which allow the user to feel a 3D effect using a multi-view images in which the same object is represented in different viewpoints from each other.

When using the 3D content, the video output unit 131 may multiplex a left-eye image and a right-eye image included in each 3D image provided from the plurality of frame rate conversion unit such as the first frame rate conversion unit 125 in a preset arrangement form and alternately arrange the multiplex image frame and image frames of the other contents.

Thus, the left-eye image and the right-eye image of the first content, the left-eye image and the right-eye image of the second content, ..., the left-eye image and the right-eye image of the nth content are sequentially arranged and displayed and the user may recognize a left-eye image and a right-eye image of one content through the glasses apparatus 200.

The audio output unit 132 may transmit an audio signal to the outside through a single channel speaker or a multi channel speaker. Alternatively, the audio output unit 132 may transmit the audio signal to the glasses apparatus 200 through the interface unit 170.

That is, the audio data output from the audio output unit 132 may be provided to the user through an output unit such as an earphone provided in the glasses apparatus 200 or output through a single channel speaker or a multi channel speaker provided in the display apparatus 100.

The remote control signal reception unit 140 (shown in FIG. 7) receives data from the input apparatus 300, for example, a remote control unit. In an exemplary embodiment, the remote control unit may be implemented with an IR type wireless communication unit which unidirectionally transmits a signal. In another exemplary embodiment, the remote control unit may be implemented with a RF type wireless communication unit which bidirectionally transmits a signal.

The remote controller signal reception unit 140 receives a control signal or a selection signal from the remote control unit 300. Here, the control signal is a signal configured to allow the display apparatus to be entirely controlled. The control unit 150 of the display apparatus 100 processes the selection signal differently from each other according to the operation mode of the display apparatus and controls the plurality of contents view displayed by the display apparatus 100.

When the selection signal is received from the remote controller signal reception unit 140, the control unit 150 performs different control operations according to an operation state of the display apparatus at a point in time when the selection signal is received. That is, the control unit 150 may control the display apparatus 100 to be switched into the single-view mode or the multi-view mode.

When the display apparatus 100 operates in the single-view mode, the control unit 150 controls the plurality of reception units 110-1 to 110-n, the plurality of signal processing unit 120-1 to 120-n, and the output unit 130 to receive and process one content and to display the processed result.

When the display apparatus 100 operates in the multi-view mode, the control unit 150 controls the plurality of reception units 110-1 to 110-n, the plurality of signal processing unit 120-1 to 120-n, and the output unit 130 to receive and process a plurality of contents and to display the processed result.

When the selection signal is received from the remote control signal reception unit 140 in a state in which the OSD menu is displayed in the video output unit 131 of the output unit 130 while the display apparatus unit 100 operates in the single-view mode, the control unit 150 controls the display apparatus to execute a control operation which corresponds to a menu selected by the received selection signal in the OSD menu.

When the selection signal is received from the remote control signal reception unit 140 in a state in which the OSD menu is not displayed, the control unit 150 controls the plurality of reception units 110-1 to 110-n, the plurality of signal processing unit 120-1 to 120-n, and the output unit 130 to be switched from the single-view mode into the multi-view mode. In an exemplary embodiment, the multi-view mode includes a dual-view mode, a triple-view mode, and a quadruple mode. The multi-view mode is not limited to the above-described view mode and may include a view mode which simultaneously displays five or more content views.

When the selection signal is received from the remote control signal reception unit 140, more than once, various modes are selected. That is, when the OSD menu is not displayed in the video output unit 131 of the output unit 130 while the display apparatus 100 operates in the single-view mode, the control unit 150 switches the content view mode in order of the dual-view mode, the triple-view mode, and the quadruple-view mode according the number of times it receives the selection signal. In addition, when the selection signal is received in the state in which the OSD menu is not displayed in the video output unit 131 of the output unit 130 while the display apparatus 100 operates in the quadruple-view mode, the control unit 150 switches the content view mode into the single-view mode.

When the selection signal received from the remote controller signal reception unit 140 in a state in which the OSD menu is displayed in the video output unit 131 of the output unit 130 while the display apparatus 100 operates in the single-view mode, the control unit 150 performs a control operation corresponding to a menu indicated by the selection signal in the OSD menu. When the selection signal is received in a state in which the OSD menu is not displayed in the video output unit 131, the control unit 150 ignores the selection signal. Alternatively, when the selection signal is received from the remote control signal reception unit 140 while the display apparatus 100 operates in the multi-view mode, the control unit 150 may select one of the plurality of content views as a control target.

The control unit 150 may receive the control signal from the input apparatus 300 using the remote control signal reception unit 140. The control unit 150 may perform a control operation corresponding to the control signal with respect to a content view which is selected as the control target based on the received control signal. For example, when the user inputs the control signal which allows brightness of the first content to be controlled, the control unit 150 controls the second signal processing unit 120-2 based on the control signal (for example, brightness increment signal) received from the input apparatus 300 through the remote control signal reception unit 140 to control the brightness of the second content view (second content) and to output the second content view using the video output unit 131 of the output unit 130.

When the selection signal is received from the remote controller signal unit 140 while the display apparatus 100 operates in the multi-view mode, the control unit 150 selects one of the plurality of content views as the control target. If the selection signal is repeatedly received through the remote controller signal reception unit 140, the control unit 150 may switch the content view so that next content views are sequentially selected corresponding to the sequentially receiving the selection signal as the control target.

When the selection signal is received from the remote control signal reception unit 140 while the display apparatus 100 operates in the multi-view mode, the control unit 150 may select a content view corresponding to the type of the received selected signal as the control target among the plurality of content views.

The control unit 150 may control the plurality of signal processing units 120-1 to 120-n and the output unit 130 to add an indicator and to represent the indicator which indicates the current control target in the video frame of a content view selected as the control target among the plurality of content views.

Further, the control unit 150 may control the plurality of signal processing units 120-1 to 120-n and the output unit 130 to add a highlight effect and to present the highlight effect in a content view selected as the control target among the plurality of content views.

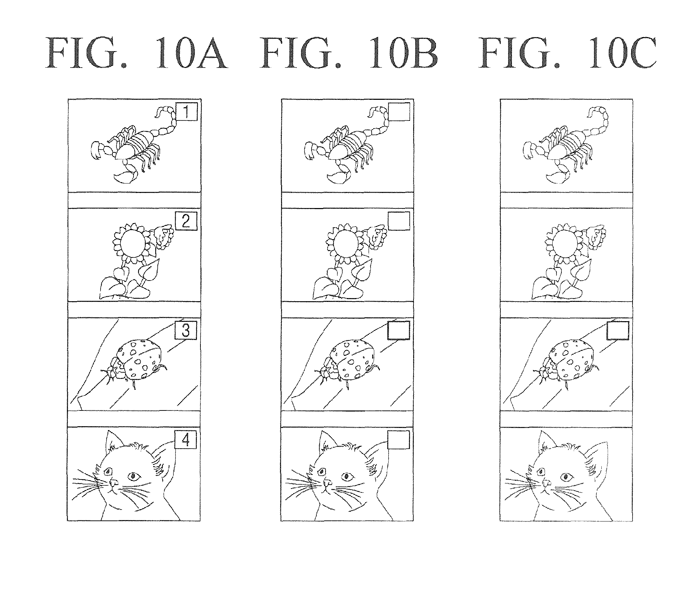

Meanwhile, when the selection signal is received from the remote control signal unit 140 while the display apparatus 100 operates in the multi-view mode, the control unit 150 may control the plurality of signal processing units 120-1 to 120-n and the output unit 130 to represent an indicator indicating a content view order in the image frame of each of the plurality of content views and change a display state of the indicator represented in the video frame of the content view selected as the control target among the plurality of content views. Hereinafter, various examples of methods of representing an indicator in the video frame of the content view will be described with respect to FIG. 10.

FIGS. 10A-10C are views illustrating various examples of methods of displaying an indicator with a displayed content view according to an exemplary embodiment.

FIG. 10A illustrates four different video images according to an exemplary embodiment. A display still image representing an indicator in which a number is represented in a rectangular-shaped figure in the first content view (first content) to the four content view (fourth content) is illustrated. Although the indicator in which a number is represented in the rectangular-shaped figure is illustrated, a shape of the indicator may have circular shape or other polygonal shape other than the rectangular shape and letters and figures, and a combination thereof may be provided to discriminate the content views.

FIG. 10B illustrates a display still image representing indicators indicated by a rectangular shape in the four content views (first content to four content). At this time, the indicator is indicated by a rectangular shape and a rectangular-shaped indicator currently selected content view is represented in higher chroma or brightness than the remaining other contents. In addition, the indicator indicates a content view currently mapped with the input apparatus through various methods such as flickering or color changing.

FIG. 10C illustrates that an indicator is represented in only one content view among four content views (first content to fourth content). The content view representing the indicator denotes a content view mapped with a corresponding input apparatus. The indicator is represented in only specific content view so that only the user who watches the specific content view can confirm a corresponding indicator. That is, when the input button of the specific input apparatus is pressed and the indicator is not represented on the video frame of the content view, it can be seen that the content view which is watched by the user and a corresponding input apparatus are not mapped with each other.

As described above, the indicators indicated in FIGS. 10A to FIGS. 10C serve to show whether the input apparatus is mapped with the content view. It shows whether the currently selected content view is mapped with the corresponding input apparatus by changing the brightness of the indicator in a predetermined period of time or displaying the indicator in a predetermined period of time.

Further, the highlight effect may be displayed by flickering a corresponding video frame entirely or displaying and flickering various figures in a specific area of a frame of a video image.

FIG. 10A to FIG. 10C illustrate that the indicator is represented in an upper right of the video frame, but that the user may adjust a position or size of the indicator.

When the user selects a single-view mode through the input apparatus 300, the control unit 150 controls the plurality of reception units 110-1 to 110-n to receive only one of the plurality of contents. The control unit 150 controls the demultiplexer 121 to separate audio signal data included in the content received from one of the plurality of reception units 110-1 to 110-n. In addition, the control unit 150 control the audio output unit 132 to perform signal processing on the separated audio signal and output the signal processed result using the output unit 130.

Next, a case in which the multi-view mode is selected by the user according to an exemplary embodiment will be described. The control unit 150 controls the plurality of reception units 110-1 to 110-n to receive the plurality of contents. Then, the control unit 150 controls the demultiplexer 121 to separate the plurality of audio signal data included in the plurality of contents received in the plurality of reception units 110-1 to 110-n. In addition, the control unit 150 controls the plurality of signal processing units 120-1 to 120-n to convert the separated audio signal from stereo audio into mono audio. The control unit 150 controls the audio output unit 132 to output the plurality of audio signals to the same channel. At this time, the plurality of audio signals may be two or more mono audio signals and the two or more audio signals may be simultaneously transmitted through one channel.

The display apparatus 100 may further include an interface unit (not shown) configured to connect to the glasses apparatus 200 and perform wired/wireless communication with the glasses apparatus 200 as described in an exemplary embodiment.

The audio output unit 132 may combine the audio signals provided from the plurality of signal processing units 120-1 to 120-n to form one audio stream and transmit the formed audio stream to each of the glasses apparatuses 200 through the interface unit.

In addition, the audio output unit 132 may transmit the plurality of audio signals provided from the plurality of signal processing units 120-1 to 120-n through channels having different radio frequencies from each other corresponding to the glasses apparatuses. Here, the channels may have communication interfaces or may be different physical channels even when the communication interfaces are the same.

An exemplary embodiment in which the audio signals are transmitted to different channels from each other will be described. The audio output units may be configured to correspond to the audio processing units in one to one correspondence. For example, when the display apparatus 100 receives the first to third contents through the plurality of reception units 110-1 to 11-3, the first to third signal processing units 120-1 to 120-3 modulate audio data included in the first to third contents into audio signals having different frequency channels from each other using the plurality of audio processing units such as the audio processing unit 124 and output the audio signals.

When the modulated audio signals having different frequency channels are output through the first to third audio processing units, the first to third audio output units such as the audio output unit 132 transmit the audio signals for the first to third contents to the glasses apparatuses corresponding to the first to third contents.

In an exemplary embodiment, the first to third audio output units may out the audio signals for the first to third contents to the corresponding glasses apparatuses in a wireless communication manner such as a Bluetooth communication method. Specifically, the first to third audio output units transmit the generated audio signal streams to the glasses apparatuses through the interface unit 170 according to identification information of the paired plurality of glasses apparatuses.

That is, each of the plurality of glasses apparatuses may receive one of the audio signal streams output through the first to third audio output units and output the received audio signal stream through a speaker. Therefore, the user wearing the glasses apparatus may listen to the audio of a corresponding content through the speaker provided in the glasses apparatus together with a video image for a content which is watched by the user.

In another exemplary embodiment, the first to third audio output unit may output the audio signals for the first to third contents to the glasses apparatuses in a RF communication manner. As described above, the audio signals for the first to third contents may be the signals having different frequency channels from each other. Therefore, the first to third audio output units 3 may output the audio signals to the frequency channels corresponding to the first to third contents.

In this case, the user wearing the glasses apparatus may select the frequency channel using the button provided in the glasses apparatus. By the selection of the frequency channel, the glasses apparatus receives the audio signal output through the selected frequency channel and outputs the received audio signal through the speaker, so that the user can listen to the audio related to the content being watched.

In the above-described exemplary embodiment the audio signals are output in a Bluetooth communication method or a RF communication method, but the method is only illustrative and in no way limiting. The audio signals may be output in another communication method.

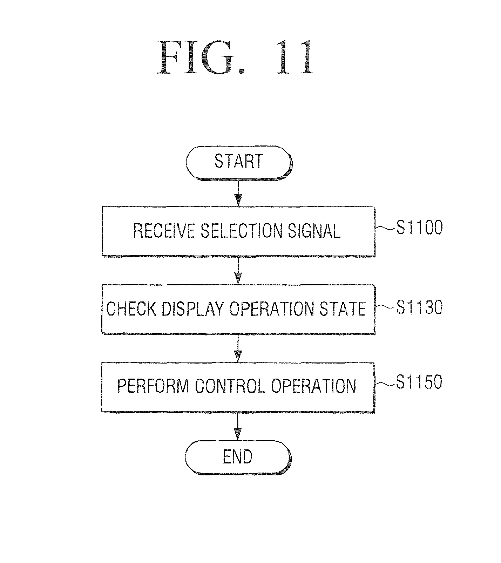

FIG. 11 is a flowchart illustrating a method of controlling a display apparatus according to an exemplary embodiment.

Referring to FIG. 11, the method of controlling the display apparatus according to an exemplary embodiment includes a process of receiving a selection signal (receive selection signal - S1110), a process of checking a display operation state (check display operation state - S1130), and a process of performing a control operation (perform control operation - S1150).

In the process of receiving a selection signal (S1110), when the user selects the button provided in the input apparatus 200, a signal of a corresponding button is input to the display apparatus 100.

The process of checking a display operation state (S1130) checks whether the display apparatus 100 operates in one of the single-view mode and the multi-view mode at a point in time when the selection signal is input.

The process of performing a control operation (S1150) performs a control operation such as a direction movement, a specific function, and a selection function when the direction key (320), the functional key (330), and the selection key (340) (shown by way of an example in FIG. 3) are pressed among the buttons of the input apparatus 300 in a state in which the OSD menu is displayed in the video output unit 131 of the display apparatus 100. However, when the direction key (320), the functional key (330), and the selection key (340) are pressed among the buttons of the input apparatus 300 in a state in which the OSD menu is not displayed in the video output unit 131 of the display apparatus 100, the process of performing a control operation performs a control operation such as content mode switching, specific content view selection, indicator representation, and highlight representation.

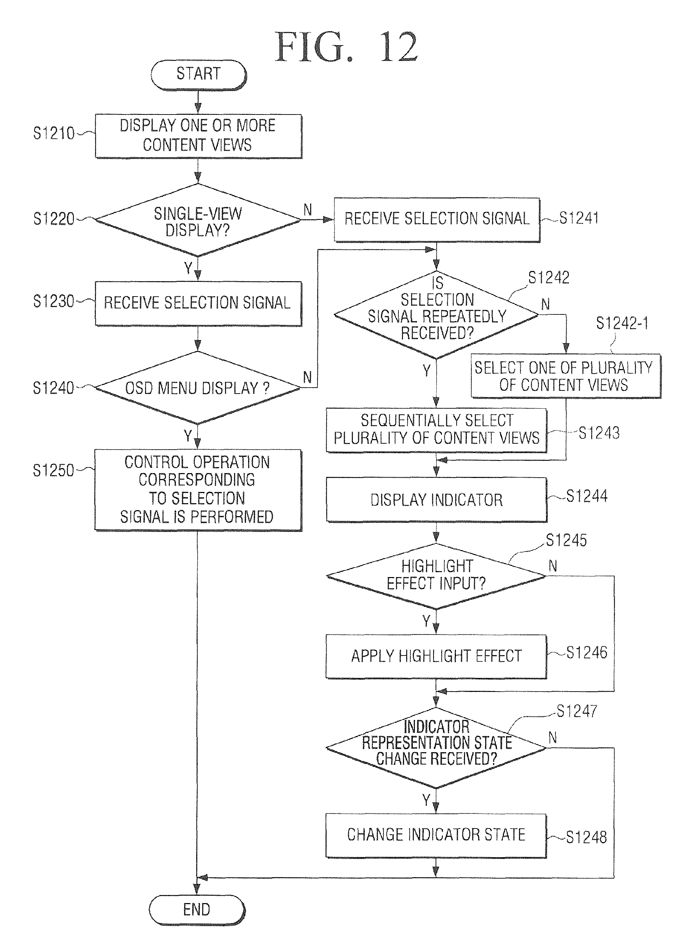

FIG. 12 is a flowchart illustrating in detail a method of controlling a display apparatus according to an exemplary embodiment.

A plurality of contents received from the plurality of content providing sources are being display in at least one content view (operation S1210). It is checked whether or not the content view being displayed is a single-view (operation S1220). In a state in which one content view is displayed (operation S1220-Y), the selection signal is received (operation S1230). It is checked whether or not an OSD menu is displayed in the display apparatus (operation S1240). When the OSD menu is displayed in the display apparatus 100 (operation S1240-Y), a control operation corresponding to the selection signal is performed (operation S1250).

The process of performing a control operation corresponding to the selection signal performs a unique function that is selected by using a corresponding selection key. Alternatively, when the functional key 330 (shown in FIG. 3) of the input apparatus is selected, the process performs execution of a corresponding specific function displayed in the OSD menu or cancels execution of the specific function (operation S1250).

In a state in which the OSD menu is not displayed in the display apparatus 100 (operation S1240-N), it is checked whether or not the selection signal is repeatedly received (operation S1242). When the selection signal is repeatedly received (operation S1242-Y), the plurality of content views are sequentially selected i.e., switched (operation S1243). The process of switching the contents views includes performing switching between the content views being displayed in the display apparatus 100.

That is, when the selection signal is received (operation S1230) while the display apparatus 100 operates in a single-view mode and it is determined that the OSD menu is not displayed in the display apparatus 100 (operation S1240-N), the display apparatus 100 switches the content view from the signal-view mode to the multi-view mode.

When it is checked whether or not the selection signal is repeatedly received (operation S1242) and it is determined that the selection signal is repeatedly received (operation S1242-Y), the plurality of content views are sequentially switched (operation S1243). That is, according to the number of the selection signal received, the content view is switched from the single-view mode into the dual-view mode, from the dual-view mode into the triple-view mode, from the triple-view mode into the quadruple-view mode, and from the quadruple-view mode into the single-view mode.

When it is determined that the selection signal is not repeatedly received (operation S1242-N), one of the plurality of content views is selected (operation S1242-1). For example, the case in which the selection signal is repeatedly received denotes the case in which the user selects any one of the functional keys 330 of the input apparatus 300 (shown in FIG. 3 by way of an example). When content views are preset to be selected using the corresponding functional keys, the user selects a functional key to select a content view corresponding thereto.

After one of the plurality of content views are selected, an indicator is displayed (operation S1244). A corresponding indicator may be displayed in all content views or only in a specific content view.

It is determined whether or not a highlight effect control signal is input in a state in which the indicator is displayed in the video frame (operation S1245). When it is determined that the highlight effect control signal is input (operation S1245-Y), the highlight effect is applied (operation S1246). The highlight effect may be implemented with various methods such as a method of increasing brightness of a corresponding indicator compared with the remaining indicators or variably changing the brightness of the corresponding indicator or a method of adding a color to the corresponding indicator to be distinguished by the user. If it is determined that the control signal for highlight effect is not input (operation S1245 - N), the process may proceed to operation of determining whether a control signal for changing an indicator has been input (operation S-1247).

Then, it is determined whether or not a control signal for changing an indicator representation state is received (operation S1247) and when it is determined that the indicator representation control signal is not received (S1247-N), the control operation is completed.

When it is determined that the indicator representation control signal is received (operation S1247-Y), the indication representation state is changed (operation S1248) and the control operation is completed. The changing the indicator representation state may include changing a method of representing the indicator. That is, the controlling of representing the indicator may include representing the indicator in a specific position of the video frame of the content view. As such, changing the indicator representation change may include changing a representation position of the indicator, or changing a representation state of the indicator such as displaying the indicator for a present time or allowing the indicator to be disappeared for a preset time.

In flowchart of FIG. 12, the control operations such as content mode selection, content mode switching, indicator representation, highlight effect application, and indicator state changing have been described according to an exemplary embodiment. However, in another exemplary embodiment, the control operations such as changing a channel, a volume, or brightness in the selected content view may be performed as well as other control operations that are known in the art.

Further, the above-described method of controlling a display apparatus may be applied to the above-described display apparatus and may be implemented with at least one execution program for executing the method of controlling a display apparatus according to an exemplary embodiment.

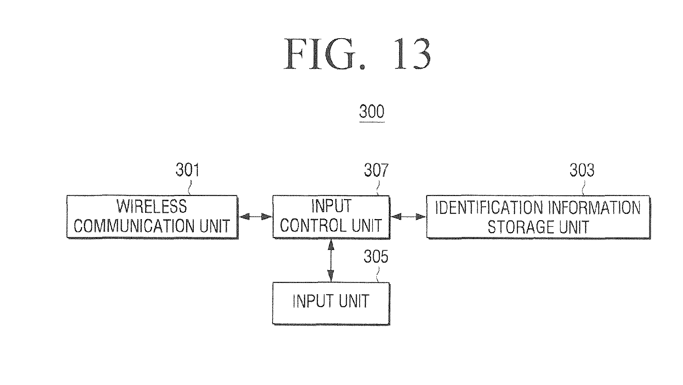

FIG. 13 is a block diagram illustrating a detailed configuration of an input apparatus according to an exemplary embodiment.

Referring to FIG. 13, the input apparatus 300 according to an exemplary embodiment includes a wireless communication unit 301, an identification information storage unit 303, an input unit 305, and an input control unit 307.

The wireless communication unit 301 may be connected to the display apparatus 100 in a wireless communication manner. The wireless communication unit 301 may transmit or receive data in an RF manner or an IR type. At this time, when the wireless communication method of the input apparatus 300 is the IR type, a unidirectional wireless communication with the display apparatus 100 is performed. While the wireless communication method of the input apparatus 300 is the RF type, a bidirectional wireless communication between the input apparatus 300 and the display apparatus 100 is performed. The RF wireless communication may be implemented with a bidirectional wireless communication such as a wireless local area network (WLAN) or Bluetooth. The wireless communication unit may include at least one hardware component and/or at least one software component.

The identification information storage unit 303 stores unique identification information of the input apparatus 300. The unique identification information denotes an identification (ID) of the input apparatus. The unique identification information denotes various kinds of information to distinguish a corresponding input apparatus from other input apparatuses in the RF type input apparatus. The identification information storage unit 303 may be omitted in the IR type input apparatus. The identification information storage unit may include at least one hardware component such as a memory card and/or software components.

The input unit 305 is an input unit configured to input a control command for controlling the display apparatus. That is, the input unit 305 may include a plurality of button. The plurality of buttons are functional keys configured to instruct that various separate functions are to be performed, when the respective functional keys are selected. The input unit 305 may include any one of an electronic button, a mechanical button, an electrostatic button, and a combination thereof.

The input control unit 307 controls the identification information storage unit 303 and the wireless communication unit 301 to provide unique identification information stored in the identification information storage unit 303 to the display apparatus 100 through the wireless communication unit 301 and further performs pairing between the input apparatus 300 and the display apparatus (now shown). The input control unit 307 controls the wireless communication unit 301 to transmit a control command to the display apparatus 100 through the wireless communication unit 301 when the control command is input through the input unit in a state in which the input apparatus 300 is paired to the display apparatus. That is, the input control unit 307 may perform a function to control an overall operation of the input apparatus 300 so that the user may remotely control an output operation of one of the plurality of content views.

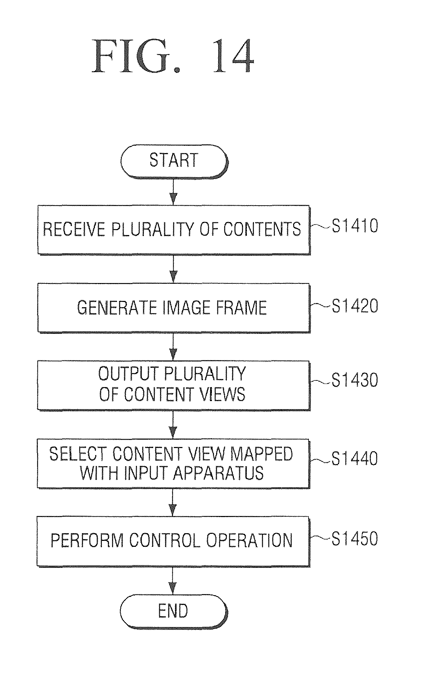

FIG. 14 is a flowchart illustrating a method of controlling the display apparatus according to another exemplary embodiment.

A display apparatus receives a plurality of contents (operation S1410), the display apparatus generates a video frame (operation S1420), the display apparatus outputs a plurality of content views (operation S1430), the display apparatus selects a content view mapped with the input apparatus (operation S1440), and performs a control operation (in operation S1450).

The process of receiving a plurality of contents (operation S1410) includes receiving a plurality of contents different from each other from a plurality of content providing sources. Specifically, the display apparatus may receive the contents from a broadcasting station configured to transmit broadcasting program contents using a broadcasting network or a web server configured to transmit content files using Internet. In addition, the display apparatus 100 receives the plurality of contents from a recording medium reproducing apparatus embedded therein or connected thereto, for example, an apparatus configured to reproduce contents stored in various types of recording media such as CDs, DVDs, hard discs, blue-ray discs, memory cards, and USB memories.

The process of generating a video frame (operation S1420) includes converting video frames included in the received plurality of contents into video frames which are displayable by the display apparatus. That is, the display apparatus performs decoding on video data included in the received content, performs up or down scaling so the content is suitable for a screen size of the output unit 130 (shown in FIG. 7), combines the image frames alternately, and generates the video frames including the plurality of content views.

The process of outputting a plurality of content views (operation S1430) includes alternately arranging the video frames of the plurality of content views and displaying the video frames. That is, the display apparatus 100 multiplexes the video images of the plurality of contents to be alternately arranged and displays a multiplexed result. In some cases, the display apparatus may perform up or down scaling on the video frames of the contents so they are suitable for a particular screen size. For example, in a shutter glass type display apparatus, a plurality of content views are configured such that a video frame of a first content, a video frame of a second content frame, ..., a video frame of a n-th content are alternately arranged.

The processing of selecting a content view mapped with the input apparatus (operation S1440) includes selecting the content view mapped with the input apparatus using the input apparatus in the case in which a plurality of input apparatuses and a plurality of content views are available. The mapping relationship between the plurality of input apparatuses and a plurality of content views may be stored in the storage unit 180 (shown in FIG. 8) of the display apparatus as a default value. For example, when a first input apparatus stores the mapping information with a first content view in the storage unit 180, if the first input apparatus is paired to the display apparatus 100, the first input apparatus is automatically mapped with the first content view.

The process of performing a control operation (operation S1450) includes controlling the content view mapped with the corresponding input apparatus using the corresponding input apparatus. Specifically, the control operation may include changing a common setting of the display apparatus, changing a channel, brightness, or a volume of the corresponding content view, and the like. The above-described control operation is merely illustrative and may include changing or correcting various other setting values for the corresponding content view.

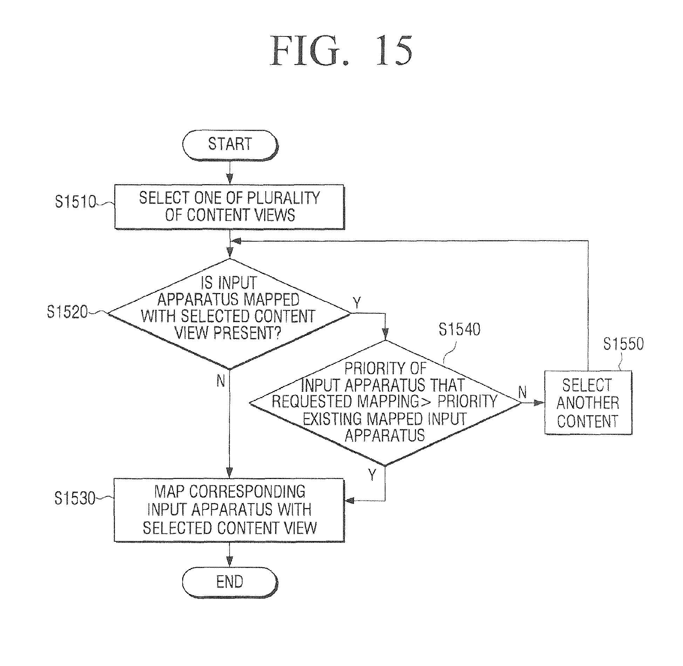

FIG. 15 is a flowchart illustrating a method of changing mapping between the plurality of content views and input apparatuses according to another exemplary embodiment.

The operation of changing the mapping relationship between the plurality of content views and the input apparatuses includes a process of selecting one of a plurality of content views (operation S1510), a process of determining whether or not an input apparatus mapped with the selected content view is present (operation S1520), a process of mapping the input apparatus with the selected content view (operation S1530), a process of comparing a priority of an input apparatus that requested mapping with that of a previously mapped input apparatus (operation S1540), and a process of selecting another content view (operation S1550).

The process of selecting one of a plurality of content views (operation S1510) selects one of the plurality of content view using the input apparatus mapped with a specific content view. When the input apparatus is paired to the display apparatus, the corresponding input apparatus is automatically mapped with the specific content view randomly. Alternatively, when the input apparatus is paired to the display apparatus, the corresponding input apparatus may be mapped with the specific content view based on the mapping relationship information stored in a storage unit. The input apparatus mapped with the specific content view is switched to select another content view. When the switching operation of the content view using the input apparatus is completed, the display apparatus requests mapping with the selected content view.

The process of determining whether or not the input apparatus mapped with the selected content view is present (operation S1520) determines whether or not another input apparatus mapped with the selected content view is present after the specific content view is selected using the specific input apparatus.

When it is determined that the input apparatus mapped with the selected content view is not present (operation S1520-N), the display apparatus maps the corresponding input apparatus with the selected content view (operation S1530). At this time, the previous content view which has been mapped with the corresponding input apparatus becomes a content view which is not mapped with the input apparatus. The information for a new mapping relationship may be stored in the storage unit such as the storage unit 180 shown in FIG. 15.

When it is determined that the input apparatus mapped with the selected content view is present (operation S1520-Y), the priority of the mapping apparatus that requests input is compared with that of the input apparatus mapped with the selected content view (operation S1540). When it is determined that the input apparatus that requested mapping has a higher priority than the input apparatus previously mapped (operation S1540-Y), the display apparatus maps the input apparatus that requested mapping with the mapping-requested content view (operation S1550). When it is determined that the input apparatus that requested mapping has a lower priority than the input apparatus previously mapped (operation S1540-N), the input apparatus that requested mapping selects another content view. The foregoing process is analogous to the process of determining whether or not the input apparatus is mapped with the selected content view.

According to the exemplary embodiments, the plurality of content views may be independently controlled by the plurality of input apparatuses mapped with the plurality of content views displayed in the display apparatus. In addition, a corresponding content view is mapped with an input apparatus having a higher priority according to the priority order between the plurality of input apparatuses to prevent collision between the input apparatuses. Further, the mapping relationship between the plurality of content views and the plurality of input apparatuses may be easily changed.

Further, the method of controlling a display apparatus may be applied to the above-described display apparatus and may be implemented with at least one execution program for executing a method of controlling a display apparatus.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A display apparatus, comprising:
a plurality of reception units configured to receive a plurality of contents different from each other;
a signal processing unit configured to process each of the plurality of contents;
an output unit configured to output contents processed in the signal processing unit;
a remote controller signal reception unit configured to receive a selection signal from a remote controller; and
when the selection signal is received, a control unit configured to perform different control operations according to an operation state of the display apparatus when the selection signal is received.

2. The display apparatus as claimed in claim 1, wherein the control unit controls the plurality of reception units, the signal processing unit, and the output unit to be switched into a selected mode of a single-view mode and a multi-view mode to be operable, to receive, process, and display one content when the single-view mode starts, and to receive, process, and display the plurality of contents when the multi-view mode starts.

3. The display apparatus according to any one of claims 1 or 2, wherein, the selection signal is received in an operation state in which an on-screen display (OSD) menu is displayed in the output unit in the single-view mode, the control unit performs a control operation corresponding to a menu selected by the selection signal in the OSD menu, and
when the selection signal is received in an operation state in which the OSD menu is not displayed, the control unit is switched into the multi-view mode,
wherein the multi-view mode includes a dual-view mode, a triple-view mode, and a quadruple-view mode,
when the selection signal is received a repeated number of times in an operation state in which the menu is not displayed in the single-view mode, the control unit is switched in order of the dual-view mode, the triple-view mode, and the quadruple-view mode according to the number of times the selection signal has been received; when the selection signal is received in the quadruple-view mode, the control unit is switched to the single-mode view.

4. The display apparatus according to any one of claims 1-3, wherein, when the selection signal is received in an operation state in which the OSD menu is displayed in the output unit in the single-view mode, the control unit performs a control operation corresponding to a menu selected by the selection signal among the OSD menu, when the selection signal is received in an operation state in which the OSD menu is not displayed, the control unit ignores the selection signal, and
when the selection signal is received in an operation state in the multi-view mode, the control unit selects one of the plurality of content views as a control target.

5. The display apparatus according to any one of claims 1-4, wherein the remote controller signal reception unit receives a control signal from the remote controller,
when the control signal is received, the control unit performs a control operation corresponding to the control signal with respect to the selected content view as the control target,
wherein, when the selection signal is received in an operation state in the multi-view mode, the control unit selects one of the plurality of content views as the control target,
when the selection signal is repeatedly received, the control unit sequentially selects a next content view as the control target for each reception of the selection signal.

6. The display apparatus according to any one of claims 1-5, wherein, when the selection signal is received in an operation of the multi-view mode, the control unit selects a content view corresponding to a type of the selection signal among the plurality of content views as the control target.

7. The display apparatus according to any one of claims 1-6, wherein the control unit controls the signal processing unit and the output unit to add an indicator indicating the control target in a video frame of the content view selected as the control target among the plurality of content views and to display the indicator.

8. The display apparatus according to any one of claims 1-7, wherein the control unit controls the signal processing unit and the output unit to add a highlight effect to the content view selected as the control target among the plurality of content views and to display the highlight effect.

9. The display apparatus according to any one of claims 1-8, wherein, when the selection signal is received in an operation state of the multi-view mode, the control unit controls the signal processing unit and the output unit to display an indicator indicating a content-view order in a video frame of each of the plurality of content views and to change a display state of the indicator represented in a video frame of the content view selected as the control target among the plurality of content views.

10. The display apparatus according to any one of claims 1-9, further comprising a storage unit configured to store information for a plurality of remote controllers mapped with the plurality of content views, respectively,
wherein, when the control signal is input using one of the plurality of remote controller, the control unit performs a control operation corresponding to the control signal with respect to a content view being mapped with a remote controller which transmits the control signal.

11. The display apparatus as claimed in claim 10, wherein the control unit determines a mapping state with the plurality of content views according to a priority of the plurality of remote controllers,
wherein, when a new remote controller is paired and one of the plurality of content views is selected, the control unit determines whether or not the existing remote controller mapped to the selected content view is present, and maps the selected content view with the new remote controller when the existing remote controller is not present,
when the existing remote controller is present, the control unit compares a priority between the existing remote controller and the new remote controller, and maps a remote controller having a higher priority with the selected content view.

12. An input apparatus, comprising:
a wireless communication unit configured to wirelessly communicate with the display apparatus;
an identification information storage unit configured to store unique identification information;
an input unit configured to input a control command; and
an input control unit configured to transmit the unique identification information to the display apparatus using the wireless communication unit to perform pairing and, when the control command is received in a state in which the pairing is made, to transmit the control command to the display apparatus to control an operation of one of the plurality of content views.

13. A method of controlling a display apparatus, the method comprising:
receiving a selection signal from a remote controller; and
checking an operation state of the display apparatus when the selection signal is received and performing control operations different from each other according to the operation state.

14. The method as claimed in claim 13, wherein the performing the control operations includes, when the selection signal is received in an operation state in which an OSD menu is displayed in a single-view mode, performing a control operation corresponding to a menu selected by the selection signal among the OSD menu, and when the selection signal is received in an operation state in which the OSD menu is not displayed in the single-view mode, performing switching into a multi-view mode.

15. The method as claimed in claim 14, wherein the performing the control operations includes, when the selection signal is received a repeated number of times in the operation state in which the OSD menu is not displayed in the single-view mode, sequentially performing switching in order of a dual-view mode, a triple-view mode, and a quadruple-view mode according to the number of time the selection signal is received and, when the selection signal is received in the quadruple-view mode, performing switching to the single-view mode,
when the selection is received in the operation state in which the OSD menu is displayed in the single-view mode, performing a control operation corresponding to a menu selected by the selection signal among the OSD menu, when the selection signal is received in the operation state in which the OSD menu is not displayed, ignore the selection signal, and, when the selection signal is received in the operation state of the multi-view mode, selecting one of the plurality of content views as a control target.
